(19) Europäisches Patentamt
European Patent Office
Office européen des brevets

(11) **EP 3 539 743 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(51) Int Cl.:
**B29C 45/14** *(2006.01)*     **B29D 99/00** *(2010.01)*
B29L 23/00 *(2006.01)*     B29K 705/00 *(2006.01)*
B29L 31/00 *(2006.01)*

(21) Anmeldenummer: **19155781.8**

(22) Anmeldetag: **06.02.2019**

(54) **HOHLPROFIL-VERBUNDTECHNOLOGIE**

HOLLOW PROFILE COMPOSITE TECHNOLOGY

TECHNOLOGIE DE COMPOSITES POUR PROFILÉS CREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2018 EP 18161713**

(43) Veröffentlichungstag der Anmeldung:
**18.09.2019 Patentblatt 2019/38**

(73) Patentinhaber: **LANXESS Deutschland GmbH 50569 Köln (DE)**

(72) Erfinder: **KOCH, Boris 42929 Wermelskirchen (DE)**

(56) Entgegenhaltungen:
**WO-A1-2005/002825    JP-A- H07 100 856**

EP 3 539 743 B1

**Beschreibung**

Die Erfindung betrifft ein Verfahren zur Herstellung eines Kunststoff-Metall Verbundbauteils aus wenigstens einem Hohlprofil und wenigstens einem, äußerlich mittels Spritzguss oder Formpressen aufzutragenden Kunststoffauftrag.

Vielfach werden Verbundbauteile bereits heute im Kraftfahrzeugbau eingesetzt. Zumeist werden sie aus einem metallischen Rohrprofil bzw. aus einem metallischen, geschlossenen Hohlprofil hergestellt, das mit wenigstens einem separat hergestellten Kunststoffelement verbunden wird. Das Herstellen zweier separater Bauteile, dem metallischen Rohr- bzw. Hohlprofil und dem Kunststoffelement, und schließlich das Verbinden dieser wenigstens zwei Bauteile führt zu erhöhtem Fertigungs- und Montageaufwand. Zum Verbinden des Rohr- bzw. Hohlprofils mit dem oder den Kunststoffelement(en) sind ferner zusätzliche Verbindungsmittel in Form von Schrauben, Muttern, Nieten o.ä. erforderlich, was in der Regel wiederum mehr Bauraum erfordert und zu höherem Gewicht des Verbundbauteils führt.

Vergleichbare, allein aus Kunststoff bestehende Verbundbauteile - d. h. sowohl Hohlprofil als auch Kunststoffelemente sind aus Kunststoff - zeigen bei vertretbarer Dimensionierung der Querschnitte geringere Festigkeiten und Steifigkeiten, aber auch Nachteile in der Energieaufnahme bei schlagartiger Beanspruchung, verglichen mit gleichartigen Bauteilen aus metallischen Werkstoffen.

**Stand der Technik**

WO 2009/077026 A1 betrifft ein Verfahren zur Herstellung eines Verbundbauteils aus einem Profil und einem Spritzgusselement, wobei das Spritzgusselement an das Profil angespritzt wird, so dass das Profil in Umfangsrichtung unverlierbar umgriffen wird und dabei am Profil zumindest ein Formschlusselement ausgebildet wird, das beim Anspritzen erfasst wird indem das zwischen den Enden des Profils liegende Formschlusselement in Umfangsrichtung und Längserstreckung begrenzt aus- oder eingeformt wird.

Nachteilig an dem Verfahren der WO 2009/077026 A1 ist die sehr aufwändige und kostenintensive mechanische Verbindung von spritzgegossener Kunststoffkomponente und dem Profil. Da gemäß WO 2009/077026 A1 in einem Kombinationswerkzeug vor dem Spritzgießverfahren ein Innenhochdruckumformverfahren (IHU) angewandt wird, ergibt sich zwangsläufig eine Limitierung des Verfahrens hinsichtlich der minimalen Dimension der Wanddicke des Profils, was einer Gewichtsreduktion im Sinne von modernem Leichtbau entgegen steht. Zudem ergibt sich eine Einschränkung im Hinblick auf die Schubsteifigkeit und Schubfestigkeit der Verbindung von spritzgegossener Komponente mit dem Profil. Da zudem die Verbindung beider Komponenten auf einem Formschluss beruht, lässt sich diese Verbindung nur durch ein Umspritzen des Profils in Form eines Ringes, in WO 2009/077026 A1 als Umfangslamelle bezeichnet, ausführen. Die Breite einer solchen Umfangslamelle ist jedoch begrenzt, da es sonst während des IHU zu ungewollt hohen Verformungen der Profilwandung bis hin zum Platzen derselben kommen kann. Eine Steigerung der Verbindungssteifigkeit bzw. Verbindungsfestigkeit von Profil und spritzgegossener Komponente kann deshalb in der WO 2009/077026 A1 nur durch eine Anordnung mehrerer solcher Umfangslamellen entlang des Profils erfolgen, wobei ein Mindestabstand von mehreren Millimetern zwischen den Umfangslamellen eingehalten werden muss. Dieser Abstand wird gemäß WO 2009/077026 A1 durch Kerne generiert. Ist jedoch die Breite dieser Kerne zu gering droht Kernbruch und das Platzen des Profils, da bei Anwendung des IHU die Rohrwandung des als Rohr eingesetzten Profils sowohl radial aufgeweitet, als auch axial auf der Gravur verschoben wird und das Profil dabei möglichst großflächig abgestützt werden muss. Gemäß WO 2009/077026 A1 lässt sich deshalb auf einer Profilfläche X = 100% im Mittel nur ein Anteil von maximal 50% mit Kunststoff überspritzen.

WO 2005/002825 A1 beschreibt ein Verfahren zur Herstellung eines Kunststoff-Metall-Verbundbauteils, wenigstens bestehend aus einem Hohlkörper aus Metall oder Kunststoff, welcher mindestens eine Öffnung aufweist und mit thermoplastischem Kunststoff angespritzt und/oder teilweise oder vollständig umspritzt wird, wobei beim Anspritzen und /oder Umspritzen der Hohlkörper mit einer inkompressiblen Flüssigkeit vollständig gefüllt ist. WO 2005/002825 A1 offenbart keine Lösung hinsichtlich der Handhabe der Toleranzproblematik eines erfindungsgemäß einzusetzenden Hohlprofils zur Herstellung erfindungsgemäßer Kunststoff-Metall Verbundbauteile. Ein mit Übermaß gefertigtes Hohlprofil gemäß WO 2005/002825 A1 würde sich nicht zwangfrei bzw. widerstandsfrei in eine Kavität eines erfindungsgemäß einzusetzenden Spritzgieß- oder Presswerkzeugs einlegen lassen und beim Schließen dieses Spritzgieß- oder Presswerkzeugs zu Schäden, entweder am Hohlprofil selbst oder am Spritzgieß- oder Presswerkzeug führen. Bei einem zu klein gefertigten Hohlprofil gemäß WO 2005/002825 A1 würde Kunststoffschmelze in nicht gewünschte Bereiche auf das Hohlprofil aufgetragen. Auf die Problematik der Fertigungstoleranzen des erfindungsgemäß einzusetzenden Hohlprofils wird somit in WO 2005/002825 A1 nicht eingegangen. Eine großserientaugliche Fertigung von Kunststoff-Metall Verbundbauteilen kann mit dem Verfahren gemäß WO 2005/002825 A1 nicht durchgeführt bzw. abgesichert werden.

Der vorliegenden Erfindung lag deshalb die Aufgabe zugrunde, ein Verfahren zur Herstellung von Kunststoff-Metall Verbundbauteilen bereitzustellen, bei dem ein dünnwandiges, Metall-basiertes Hohlprofil in ein Spritzgieß- bzw. Presswerkzeug eingebracht wird und dabei trotzdem eine Abdichtung eines in wenigstens einer Kavität für einen auf das Hohlprofil aufzutragenden Kunststoffauftrags sowie ggf. dessen Verteilung um das Hohlprofil herum erzielt wird, die aufzutragende bzw. die schließlich aufgetragene Kunststoffkomponente sich zudem mit der Außenseite des Hohlprofils verbindet, ohne dabei dessen gesamte Außenform zu verformen, wodurch eine radiale, als auch axiale, formschlüssige, mechanisch steifere und höher belastbare Verbundkomponente in Form eines Kunststoff-Metall Verbundbauteils entsteht, als dass es nach dem oben zitierten Stand der Technik hergestellt werden kann.

Zusätzlich bestand die zu lösende Aufgabe der vorliegenden Erfindung darin, toleranzbehaftete Hohlprofile unterschiedlichster Herkunft und unterschiedlichster Materialien in ein- und demselben Spritzgieß- oder Press-Prozess in definierten Bereichen mit Kunststoff-Funktionselement(n) zu verbinden, wobei das Hohlprofil zwangfrei bzw. widerstandsfrei um 90° mit seiner Längsachse zur Schließrichtung gedreht in ein Spritzgieß- bzw. Presswerkzeug eingebracht wird und das Hohlprofil innerhalb des Werkzeugs eine zuverlässige radiale Abdichtung seiner Umfangsfläche an den axialen Enden der Spritzgieß- bzw. Presskavität erfährt, um Kunststoffauftrag in axialer Richtung in Bereichen zu verhindern, für die kein Kunststoffauftrag vorgesehen ist.

Erfindungsgemäß herzustellende Verbundbauteile sollen keine Nachteile in der Fertigung, keine Nachteile in den Festigkeits- und Steifigkeitseigenschaften und auch keine Nachteile im Energieaufnahmeverhalten im Vergleich zum Stand der Technik aufweisen, sowie ein hohes Maß an Funktionsintegration im Sinne der System- bzw. Modulbildung bei wirtschaftlicher Fertigung, insbesondere Serienfertigung, sicherstellen.

**Erfindung**

Die Lösung der Aufgabe ist ein Verfahren zur Herstellung eines Kunststoff-Metall Verbundbauteils, insbesondere mit schubfester und formschlüssiger Verbindung der Metallkomponente und der Kunststoffkomponente, durch

a) Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Spritzgieß- bzw. Presswerkzeugs und einem Kavitätsumfangsmaß UW, das dem Umfang der Kavität im Bereich der Spritzgieß- bzw. Presswerkzeugmaße A und B entspricht,

b) Bereitstellen wenigstens eines Hohlprofils aus Metall mit einem Verhältnis von Durchmesser zu Wanddicke im Bereich von 5:1 bis 300:1, dessen Außenmaß C um einen Bereich von 0,1 bis 5% größer ist als das Werkzeugmaß A, und dessen Außenmaß D um einen Bereich von 0,1 bis 5% kleiner ist als das Werkzeugmaß B und die Angaben zu C und D sich auf 90° in Richtung zur Längsachse des Hohlprofils gesehen beziehen und dessen Hohlprofilumfangsmaß UH dem in a) genannten Kavitätsumfangsmaß UW der wenigstens einen Presswerkzeug- bzw. Spritzgießwerkzeugkavität UW entspricht,

c) Einlegen des Hohlprofils in die wenigstens eine Kavität des in a) bereitgestellten Spritzgieß- bzw. Presswerkzeugs,

d) Schließen der wenigstens einen Kavität des Spritzgieß- bzw. Presswerkzeugs sowie Verpressen des Hohlprofils mit der Werkzeugschließbewegung in Schließrichtung der wenigstens einen Kavität, wobei eine Formänderung des in b) bereitgestellten Hohlprofils stattfindet und die Außenfläche des Hohlprofils nach Beendigung des Schließvorgangs der Innenform der Kavität des in Verfahrensschritt a) bereitgestellten Spritzgieß- bzw. Presswerkzeugs im Bereich der Kontaktflächen an den axialen Enden der wenigstens einen Kavität entspricht, wobei das Hohlprofilumfangsmaß UH gleich dem Kavitätsumfangsmaß UW bleibt,

e) äußeres Auftragen eines Kunststoffauftrags in Form einer Schmelze mit einem Druck im Bereich von 1 bar bis 1000 bar auf das Hohlprofil, bevorzugt im Bereich von 10 bar bis 500bar, besonders bevorzugt im Bereich von 50 bar bis 300 bar,

f) Abkühlen des auf das Hohlprofil in e) aufgebrachten Kunststoffauftrags (Solidifikation), und

g) Entnehmen des fertigen Verbundbauteils aus dem Spritzgieß- bzw. Presswerkzeug.

Überraschenderweise erlaubt das erfindungsgemäße Verfahren durch die in den Verfahrensschritten a) und b) beschriebenen Werkzeugmaße A und B und der darauf abgestimmten und in Verfahrensschritt b) beschriebenen Hohlprofilmaße C und D ein Einlegen des Hohlprofils ins Spritzgieß- bzw. Presswerkzeug mit ausreichend Spiel und erzielt trotzdem mit der Vorgabe gleicher Umfangsmaße von Kavitätsumfang UW und von Hohlprofilumfang UH beim Schließen der wenigstens einen Kavität des Spritzgieß- bzw. Presswerkzeugs eine Abdichtung der wenigstens einen Kavität für einen auf das Hohlprofil aufzutragenden Kunststoffauftrag sowie ggf. dessen Verteilung äußerlich um das Hohlprofil herum im Verfahrensschritt d).

Ausreichend Spiel in Sinne der vorliegenden Erfindung bedeutet, dass das Kleinstmaß der Spritzbzw. Presswerkzeugkavität, rechtwinklig zur Schließrichtung des Werkzeugs gesehen, größer, im Grenzfall auch gleich groß, wie das toleranzbehaftete Außenmaß des Hohlprofilquerschnitts, ebenfalls rechtwinklig zur Schließrichtung des Werkzeugs gesehen, ist.

Vorzugsweise verhält sich deshalb das Kleinstmaß der Spritz- bzw. Presswerkzeugkavität im Bereich von 100 bis 105% zum Außenmaß des Hohlprofilquerschnitts, insbesondere 102%, jeweils senkrecht zur Schließrichtung des Werkzeugs gesehen.

Überraschender Weise funktioniert das mit ausreichend Spiel vorgesehene Einlegen des Hohlprofils ins Spritzgieß- bzw. Presswerkzeug und das Abdichten der wenigstens einen Kavität für einen als Schmelze auf das Hohlprofil aufzutragenden Kunststoffauftrag sowie ggf. dessen Verteilung äußerlich um das Hohlprofil herum, auch wenn das Hohlprofilumfangsmaß UH gegenüber dem Kavitätsumfangsmaß UW der Spritzgieß- bzw. Presswerkzeugkavität um bis zu + 5% abweicht.

Überraschenderweise erlaubt das erfindungsgemäße Verfahren zudem die Herstellung von Kunststoff-Metall Verbundbauteilen aus einem Metall basierten Hohlprofil ohne ein dem Spritzdruck bzw. Pressdruck im Innern des Hohlprofils entgegenwirkendes Hilfsmittel und ohne die Verwendung werkzeugtechnischer Operationen oder die Verwendung eines zusätzlich anzuwendenden Innen(hoch)drucks gemäß dem Stand der Technik, um eine Abdichtung zwischen dem erfindungsgemäß einzusetzenden, toleranzbehafteten Hohlprofil und dem Spritzgieß- bzw. Presswerkzeug herzustellen, gleichfalls aber genügend Unterstützung derart bereitzustellen, dass der äußerlich aufgebrachte Kunststoffauftrag formschlüssig, schubfest und schubsteif mit dem Hohlprofil verbunden wird, indem von einem Außenflächenabschnitt des Hohlprofils von X = 100%, mehr als 50%, vorzugsweise 75 bis 100%, besonders bevorzugt 90 bis 100%, mit Kunststoff verbunden werden, vorzugsweise durch Anspritzen, Umspritzen, Überspritzen, Anpressen oder Umpressen. Die Abdichtung zur wenigstens einen Kavität des Spritzgieß- bzw. Presswerkzeugs erfolgt erfindungsgemäß durch die in Verfahrensschritt d) beschriebene Verpressung des Hohlprofils selber.

Erfindungsgemäß erzielt man überraschenderweise eine formschlüssige Verbindung in Form eines Hybridbauteils durch Umspritzen des Metall basierten Hohlprofils mit Kunststoff wobei eine Blockierung folgender Freiheitsgrade erfolgt:

- radial in alle Richtungen um die Mittelachse des Hohlprofils herum,

- rotatorisch um eine Achse rechtwinklig zur Mittelachse des Hohlprofils.

Für eine zusätzliche Blockierung rotatorisch um die Mittelachse herum und translatorisch in Richtung der Mittelachse des Hohlprofils bedarf es in einer bevorzugten oder alternativen Ausführungsform einer formschlüssigen oder adhäsiven Verbindung von Hohlprofil und angespritztem Kunststoff durch eine Oberflächenbehandlung der äußeren Oberfläche des Hohlprofils. Eine solche Oberflächenbehandlung erfolgt vorzugsweise wenigstens vor Verfahrensschritt b). Als Folge dessen erzielt man eine Blockierung aller Freiheitsgrade, translatorisch in X-, Y- und Z-Richtung und rotatorisch um die X-, Y- und Z-Achse. Bevorzugte Formen der Oberflächenbehandlung sind der Auftrag wenigstens eines Haftvermittlers, eine Plasma-Oberflächenaktivierung, eine Laserstrukturierung, eine chemische Vorbehandlung oder ein additives Auftrageverfahren.

Bevorzugte chemische Vorbehandlungsmittel sind der Einsatz von Säuren oder Basen. Bevorzugtes additives Auftrageverfahren ist das thermische Metalllaufspritzverfahren. Siehe: **https://de.wikipedia.org/wiki/Thermisches_Spritzen.**

In einer weiteren bevorzugten oder alternativen Ausführungsform weist das in Verfahrensschritt b) bereitzustellende Hohlprofil auf seiner Außenseite Strukturelemente, vorzugsweise Rippen, auf, die nach dem Kunststoffauftrag in Verfahrensschritt e) und dem Abkühlen in Verfahrensschritt f) eine formschlüssige Verbindung/Verzahnung mit der Blockierung aller Freiheitsgrade, translatorisch in X-, Y- und Z-Richtung und rotatorisch um die X-, Y- und Z-Achse und somit zusätzlich eine schubfeste und schubsteife Verbindung wenigstens in axialer, vorzugsweise in axialer und radialer Richtung, bezogen auf das Hohlprofil, bilden.

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung.

Verpressen gemäß des Verfahrensschritts d) bedeutet ein Verformen des Hohlprofils bei dem keine Umfangserweiterung des Hohlprofilumfangsmaßes UH, sondern nur eine Formänderung des Hohlprofils herbeigeführt wird. Bei einem toleranzbedingten Übermaß des Hohlprofilumfangs UH wird vorzugsweise eine Formänderung herbeigeführt, verbunden mit einer geringfügigen Stauchung bzw. Umfangsreduzierung des Hohlprofilumfangsmaßes UH gegen Ende der Werkzeugschließbewegung.

Die Schubfestigkeit ist eine Stoffkonstante, die den Widerstand eines Werkstoffs gegen Abscherung beschreibt, also gegen eine Trennung durch Kräfte, die zwei einander anliegende Flächen längs zu verschieben suchen. Die Schubfestigkeit wird bestimmt durch den Schubmodul, auch Gleitmodul genannt. Schubfest miteinander verbunden bedeutet im Sinne der vorliegenden Erfindung eine in axialer Richtung, vorzugsweise in axialer und radialer Richtung, des Hohlprofils schubsteife, formschlüssige Verbindung des Hohlprofils mit wenigstens einem auf dem Hohlprofil aufgebrachten Kunststoffelement.

Die Schubsteifigkeit ist das Produkt aus dem Schubmodul $G$ eines Werkstoffs und der Querschnittsfläche $A$. Es gilt:

$$\text{Schubsteifigkeit} = G \cdot A \cdot \kappa \ (= G \cdot A_s)$$

Der querschnittsabhängige Korrekturfaktor $\kappa$ berücksichtigt dabei die über den Querschnitt ungleichförmige Verteilung der Schubspannung **T**. Oft wird die Schubsteifigkeit auch mithilfe der Schubfläche $A_s$ ausgedrückt. Siehe: **https://de.wikipedia.org/wiki/Steifigkeit.**

Formschlüssige Verbindungen im Sinne der vorliegenden Erfindung entstehen durch das Ineinandergreifen von mindestens zwei Verbindungspartnern, die eine nichtlösbare Verbindung miteinander eingehen und sich nur durch Zerstören voneinander wieder trennen. Siehe: **https://de.wikipedia.org/wiki/Verbindungstechnik.**

**Bevorzugte Ausführungsformen der Erfindung**

Vorzugsweise wird vor oder nach dem Verfahrensschritt d) das Hohlprofil an wenigstens einer Position durch das Einwirken zusätzlicher Biegekräfte an Positionen, an denen kein Kunststoffauftrag erfolgt, verformt. Vorzugsweise lässt man diese zusätzlichen Biegekräfte einwirken, wenn die endgültige Verbundbauteilform von der Form eines in Verfahrensschritt b) bereitzustellenden Hohlprofils, vorzugsweise eines Hohlprofils in gerader Rohrform, abweicht.

In einer weiteren bevorzugten oder alternativen Ausführungsform wird vor dem Verfahrensschritt g) das Hohlprofil an wenigstens einer Position durch das Einwirken zusätzlicher Biegekräfte verformt. Vorzugsweise lässt sich diese Verformung außerhalb des Spritzgieß- bzw. Presswerkzeugs an jeder beliebigen Position des Hohlprofils durchführen.

Vorzugsweise betrifft die Erfindung ein Verfahren zur Herstellung eines Kunststoff-Metall Verbundbauteils, insbesondere mit schubfester und formschlüssiger Verbindung der Metallkomponente und der Kunststoffkomponente, durch

a) Bereitstellen eines Spritzgieß- bzw. Presswerkzeugs **5** mit wenigstens einer zu öffnenden Kavität und einem **7** Werkzeugmaß A in Schließrichtung und einem **8** Werkzeugmaß B rechtwinklig zur Schließrichtung des Spritzgieß- bzw. Presswerkzeugs und einem **9** Kavitätsumfangsmaß UW, das dem Umfang der Kavität im Bereich der Spritzgieß- bzw. Presswerkzeugmaße A und B entspricht,

b) Bereitstellen wenigstens eines Hohlprofils **1** aus Metall mit einem Verhältnis von Durchmesser zu Wanddicke im Bereich von 5:1 bis 300:1, dessen **10** Außenmaß C um einen Bereich von 0,1 bis 5% größer ist als das **7** Werkzeugmaß A, und dessen **11** Außenmaß D um einen Bereich von 0,1 bis 5% kleiner ist als das **8** Werkzeugmaß B und die Angaben zu C und D sich auf 90° in Richtung zur Längsachse **3** des Hohlprofils **1** gesehen beziehen und dessen **12** Hohlprofilumfangsmaß UH dem in a) genannten Kavitätsumfangsmaß UW **9** der wenigstens einen Presswerkzeug- bzw. Spritzgießwerkzeugkavität entspricht,

c) Einlegen des Hohlprofils **1** in die wenigstens eine Kavität des in a) bereitgestellten Press- bzw. Spritzgießwerkzeugs **5**,

d) Schließen der wenigstens einen Kavität des Spritzgieß- bzw. Presswerkzeugs **5** sowie Verpressen des Hohlprofils **1** mit der Werkzeugschließbewegung in Schließrichtung **6** der wenigstens einen Kavität, wobei eine Formänderung des in b) bereitgestellten Hohlprofils **1** stattfindet und die Außenfläche des Hohlprofils 1 nach Beendigung des Schließvorgangs der Innenform der Kavität des in Verfahrensschritt a) bereitgestellten Spritzgieß- bzw. Presswerkzeugs **5** im Bereich der Kontaktflächen **4** an den axialen Enden der wenigstens einen Spritzgieß- bzw. Presskavität entspricht, wobei das Hohlprofilumfangsmaß UH **12** gleich dem Kavitätsumfangsmaß UW **9** bleibt,

e) äußeres Auftragen eines Kunststoffauftrags **2** in Form einer Schmelze mit einem Druck im Bereich von 1 bar bis 1000 bar auf das Hohlprofil, bevorzugt im Bereich von 10 bar bis 500bar, besonders bevorzugt im Bereich von 50 bar bis 300 bar

f) Abkühlen des auf das Hohlprofil **1** in e) aufgebrachten Kunststoffauftrags **2** (Solidifikation), und

g) Entnehmen des fertigen Verbundbauteils aus dem Spritzgieß- bzw. Presswerkzeug **5**.

**Verfahrensschritt a)**

Verfahrensschritt a) betrifft das Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Werkzeugs und einem Kavitätsumfangsmaß UW, das dem Umfang der wenigstens einen Kavität im Bereich der Werkzeugmaße A und B entspricht. Die Schließrichtung bezieht sich erfindungsgemäß auf das einzusetzende Spritzgieß- bzw. Presswerkzeug. Vorzugsweise weist ein erfindungsgemäß einzusetzendes Spritzgieß- bzw. Presswerkzeug zwei Werkzeughälften auf. Je nach Ausgestaltung des zu fertigenden Verbundbauteils können aber die Werkzeughälften wiederum aus mehreren Segmenten bestehen. Der Fachmann wird die Auslegung des einzusetzenden Spritzgieß- bzw. Presswerkzeugs entsprechend dem zu fertigenden Verbundbauteil anpassen. Eine Zusammenfassung erfindungsgemäß einzusetzender Spritzgieß- bzw. Presswerkzeuge sowie zu Herstellern derselben findet sich u.a. in W. Michaeli, G. Menges, P. Mohren, Anleitung zum Bau von Spritzgießwerkzeugen, 5. völlig überarbeitete Auflage, Carl Hanser Verlag München Wien 1999 **(englische Ausgabe 2001).**

Vorzugsweise weist ein erfindungsgemäß einzusetzendes Spritzgieß- bzw. Presswerkzeug folgende Merkmale auf, damit sich ein erfindungsgemäß einzusetzendes Hohlprofil mit all seinen Maß- und Formtoleranzen ohne Zwang in das Spritzgieß- bzw. Presswerkzeug einlegen lässt:

**aI.** Das Spritzgieß- bzw. Presswerkzeug muss so beschaffen sein, dass es die Spritzgieß- bzw. Presswerkzeugkavitäten zu den Bereichen des Hohlprofils, in denen in Verfahrensschritt e) kein Kunststoffauftrag erfolgen wird, beim Schließen des Werkzeugs abdichtet. Dazu sind im Spritzgieß- bzw. Presswerkzeug an den axialen Enden der Spritzgieß- bzw. Presskavitäten Kontaktflächen im Werkzeug notwendig, die das Hohlprofil während des Schließens des Werkzeugs von dessen Hohlprofilaußenmaß C auf das Werkzeugmaß A verpressen, wodurch sich gleichzeitig das Hohlprofilaußenmaß D auf das Werkzeugmaß B ändert und wobei das Hohlprofilumfangsmaß UH gleich dem Kavitätsumfangsmaß UW der wenigstens einen Spritzgieß- bzw. Presswerkzeugkavität bleibt;

**aII.** In einer Ausführungsform sind die Kontaktflächen der wenigstens zwei Werkzeughälften zum Hohlprofil im Spritzgieß- bzw. Presswerkzeug so ausgeführt, dass ein um bis zu +5% größeres Hohlprofilumfangsmaß UH über die in **aI.** beschriebene Verpressung hinaus auf das gleiche in **aI.** beschriebene Kavitätsumfangsmaß UW zusätzlich verpresst wird;

**aIII.** Die in **aI.** und **aII.** genannten Kontaktflächen der wenigstens zwei Werkzeughälften im Spritzgieß- bzw. Presswerkzeug umfassen das Hohlprofil bei geschlossenem Werkzeug in seinem gesamten Umfang und weisen vorzugsweise eine Breite, d. h. eine Ausdehnung in axialer Richtung des Hohlprofils gesehen, im Bereich von 1,0 bis 50,0 mm auf, bevorzugt 3,0 bis 25,0 mm, besonders bevorzugt 5,0 bis 10,0 mm;

**aIV.** In einer Ausführungsform sind die Kontaktflächen der wenigstens zwei Werkzeughälften zum Hohlprofil im Spritzgieß- bzw. Presswerkzeug so ausgeführt, dass diese Bereiche im Werkzeug durch gehärtete Einsätze dargestellt werden. Vorzugsweise weisen die gehärteten Einsätze eine Härte nach Rockwell im Bereich von 50 bis 62 HRC auf. Damit liegt die Härte im Bereich üblicher Biege- und Stanzwerkzeuge. Siehe: **https://de.wikipedia.org/wiki/Rockwell_(Einheit);**

**aV.** Das Spritzgieß- bzw. Presswerkzeug muss zwischen seinen Kontaktflächen außerhalb der wenigstens einen Kavität einen Freiraum um das Hohlprofil herum bieten. Vorzugsweise beträgt bzw. liegt dieser Freiraum im Bereich von 1,0 bis 10,0 mm.

**Verfahrensschritt b)**

Im Verfahrensschritt b) wird wenigstens ein Hohlprofil mit einem Verhältnis von Durchmesser zu Wanddicke im Bereich von 5:1 bis 300:1, vorzugsweise im Bereich von 10:1 bis 200:1, besonders bevorzugt im Bereich von 10:1 bis 100:1, bereitgestellt, dessen Hohlprofilaußenmaß C um einen Bereich von 0,1 bis 5% größer ist, als das Werkzeugmaß A der Kavität und dessen Hohlprofilaußenmaß D um einen Bereich von 0,1 bis 5% kleiner ist, als das Werkzeugmaß B der wenigstens einen Kavität und dessen Hohlprofilumfangsmaß UH dem in Verfahrensschritt a) genannten Kavitätsumfangsmaß UW entspricht. Erfindungsgemäß beziehen sich die Angaben zu den Hohlprofilaußenmaßen C und D des in Verfahrensschritt b) bereitzustellenden Hohlprofils auf 90° in Richtung zur Längsachse des Hohlprofils gesehen, und die Angabe zu UH bezieht sich auf den Bereich von Hohlprofilaußenmaß C und D.

Ein erfindungsgemäß einzusetzendes Hohlprofil kann nach verschiedenen Verfahren hergestellt werden, verschiedene Querschnittsformen aufweisen und aus verschiedenen Materialien bestehen. Vorzugsweise wird zu dessen Herstellung wenigstens eine der Techniken Strangpressen, Strangziehen, Extrudieren, Blasformen, Spritzgießen, Nahtlosziehen, Längsschweißen, Spiralschweißen, Wickeln und Pultrusion eingesetzt. Ein erfindungsgemäß einzusetzendes dünnwandiges Hohlprofil kann dabei einen kreisrunden, elliptischen, oder polygonförmigen - dreieckigen, viereckigen, fünfeckigen etc. bis hin zu einem vieleckigen - Querschnitt aufweisen.

Dünnwandig im Sinne der vorliegenden Erfindung bedeutet vorzugsweise ein Verhältnis von Durchmesser eines erfindungsgemäß einzusetzenden Hohlprofils zu dessen Wanddicke im Bereich von 5:1 bis 300:1, besonders bevorzugt im Bereich von 10:1 bis 200:1, ganz besonders bevorzugt im Bereich von 10:1 bis 100:1.

Vorzugsweise weist ein in Verfahrensschritt b) bereitzustellendes Hohlprofil eine Wanddicke im Bereich von 0,1 bis 10,0 mm auf. Ein erfindungsgemäß einzusetzendes Hohlprofil weist vorzugsweise wenigstens zwei Öffnungen, jeweils eine an den Stirnseiten, auf.

Erfindungsgemäß einzusetzende Hohlprofile sind aus einem Metall gefertigt, wobei Metall auch Legierungen umfasst.

Bevorzugte Metalle zur Herstellung erfindungsgemäß einzusetzender Hohlprofile sind Stahl, Aluminium, Magnesium, Kupfer, Titan, Zinn, Zink, Blei, Silber, Gold oder deren Legierungen, insbesondere Stahl, $AlMgSi_{0,5}$ oder Messing.

Besonders bevorzugt werden Hohlprofile aus Aluminium oder Stahl, insbesondere Legierungen dieser beiden Materialien, eingesetzt. Dem Fachmann sind solche Legierungen aus der Halbzeugherstellung bekannt.. Im Falle von Aluminiumlegierungen weiß der Fachmann, dass Magnesium die Festigkeit steigert, jedoch gleichzeitig stark die Umformbarkeit verringert, wohingegen Silizium hier nur geringe Auswirkungen hat. Diese beiden Eigenschaften werden von Mangan nur mäßig und von Zink nur gering beeinflusst. Kupfer steigert die Festigkeit stark und ist günstig für die Zähigkeit. (Siehe: **W.Hartmann & Co. (GmbH & Co.KG), 2018: produktinfos/ff2/index_ger.html).** Im Falle von Aluminium- bzw. Aluminiumlegierungen sei zusätzlich verwiesen auf D. Altenpohl, Aluminium und Aluminiumlegierungen, Springer Verlag Berlin Heidelberg, 1965**. Bezüglich Stahllegierungen sei verwiesen auf DIN EN 10020, DIN EN 10208, DIN EN 10216, DIN EN 10217 und DIN EN 10130.**

Typische Verfahren der Halbzeugherstellung von Hohlprofilen sind dem Fachmann als Strangpressen, Walzen und Rollformen bekannt.

Vorzugsweise weisen erfindungsgemäß einzusetzende Hohlprofile bzw. die darin einzusetzenden Metalle bzw. Legierungen eine Bruchdehnung > 3% auf. Die Bruchdehnung ist ein Kennwert der Werkstoffwissenschaften, der die bleibende Verlängerung der Zugprobe nach dem Bruch, bezogen auf die Anfangsmesslänge, angibt. Sie charakterisiert die Verformungsfähigkeit bzw. Duktilität eines Werkstoffes und kann, entsprechend dem charakteristischen mechanischen Verhalten der Werkstoffarten, unterschiedlich definiert und auch mit unterschiedlichen Symbolen bezeichnet sein. Die Bruchdehnung ist die auf die Anfangsmesslänge einer Probe im Zugversuch bezogene bleibende Längenänderung nach erfolgtem Bruch. Die Anfangsmesslänge wird vor dem Zugversuch durch Messmarken auf der Zugprobe festgelegt. Siehe: **https://de.wikipedia.org/wiki/Bruchdehnung.**

Sollten andere Herstellungverfahren als die zuvor genannten Hohlprofil-Herstellungsverfahren zwecks einer Fertigungstoleranzminimierung angewendet werden, so können auch Materialien mit einer Bruchdehnung <3% angewendet werden.

Erfindungsgemäß bevorzugt werden Metallrundrohre, Metallrechteckrohre oder Metallvierkantrohre als Hohlprofil eingesetzt. Derartige Rohre werden beispielsweise von Mifa Aluminium B.V., Rijnaakkade 6, 5928 PT Venlo, Niederlande, angeboten.

**Verfahrensschritt c)**

Neben der Gestaltung des in Verfahrensschritt b) bereitzustellenden Metall basierten Hohlprofils ist ebenso die Gestaltung des in Verfahrensschritt a) bereitzustellenden Spritzgieß- bzw. Presswerkzeugs wichtig, damit das erfindungsgemäße Verfahren, insbesondere das Einlegen und das Abdichten der wenigstens einen Kavität, problemlos funktioniert.

Das Einlegen des Hohlprofils in die wenigstens eine Kavität erfolgt dabei **ohne** dass eine Aufweitung des Hohlprofils erfolgt. Das Abdichten der Fuge zwischen Hohlprofil und der Kavität des Spritzgieß- bzw. Presswerkzeugs, die sich an den mit Kunststoffauftrag zu versehenden Hohlprofilabschnitt anschließt, erfolgt allein beim Schließen des Spritzgieß- bzw. Presswerkzeugs durch Formänderung des Umfangs des Hohlprofils, wobei der Hohlprofilumfang UH selber unverändert bleibt.

Im Falle des bevorzugten Einsatzes von Hohlprofilen mit rundem Umfang, wobei das Hohlprofil die Form eines Rohres hat, erfolgt eine Formänderung vorzugsweise zu einer Ellipse. Im Falle des Einsatzes von Hohlprofilen mit elliptischem Umfang erfolgt die Formänderung vorzugsweise zu einem runden Umfang.

Vorzugsweise liegt das Verhältnis des Hohlprofilumfangsmaßes UH zum inneren Kavitätsumfangsmaß UW bei 1 : 1. Es ist für den Fachmann außerordentlich überraschend, dass allein durch die Schließbewegung des Spritzgieß- bzw. Presswerkzeugs und die daraus resultierende Formänderung des Hohlprofils gegenüber dem inneren Umfang der Werkzeugkavität UW der Spalt bzw. die Fuge zuverlässig verschlossen und damit für den Spritzgieß- bzw. Pressvorgang abgedichtet wird, und selbst bei einem toleranzbedingten Übermaß des Hohlprofilumfangs UH um bis zu +5%, überschüssiges Material der Hohlprofilwandung nicht in die Trennebenen des Spritzgieß- bzw. Presswerkzeugs hineingepresst wird. Dadurch ist sichergestellt, dass es weder zu Beschädigungen des Werkzeugs, insbesondere zu Beschädigungen der Trennebenen, noch zu Beschädigungen des Hohlprofils selbst kommen kann. Diese Eigenschaft des erfindungsgemäßen Verfahrens, die Formänderung des Hohlprofils mit dem Schließen des Spritzgieß- bzw. Presswerkzeugs und damit gleichzeitig das Abdichten der Werkzeugkavität gegenüber der Hohlprofilaußenfläche erlaubt das anschließende und örtlich begrenzte Auftragen von Kunststoff auf das Metall basierte Hohlprofil in Verfahrensschritt e) ohne im Innern des Hohlprofils positionierte und dem Spritz- bzw. Pressdruck entgegenwirkende Hilfsmittel und damit gegenüber dem Stand der Technik ohne zusätzliche Verfahrensschritte und unter deutlich verkürzten Zykluszeiten.

Vorzugsweise weisen ein erfindungsgemäß einzusetzendes Spritzgieß- bzw. Presswerkzeug und auch ein erfindungsgemäß einzusetzendes Metall basiertes Hohlprofil folgende Merkmale auf, damit sich Letzteres mit all seinen Maß- und Formtoleranzen ohne Zwang in das in Verfahrensschritt a) bereitgestellte Werkzeug einlegen lässt:

    **cl.** Das Spritzgieß- bzw. Presswerkzeug muss so beschaffen sein, dass es die Spritzgieß- bzw. Presskavitäten zu den Bereichen des Hohlprofils, in denen in Verfahrensschritt e) kein Auftrag von Kunststoff erfolgen wird, beim Schließen des Werkzeugs abdichtet. Dazu sind im Spritzgieß- bzw. Presswerkzeug an den axialen Enden der wenigstens einen Kavität Kontaktflächen im Werkzeug notwendig, die das Hohlprofil während des Schließens des Werkzeugs vom Hohlprofilaußenmaß C auf das Werkzeugmaß A verpressen, wodurch sich gleichzeitig das Hohlprofilaußenmaß D auf das Werkzeugmaß B ändert, aber das Hohlprofilumfangsmaß UH gleich dem Kavitätsumfangsmaß UW bleibt;

**cII.** In einer Ausführungsform sind die Kontaktflächen der wenigstens zwei Werkzeughälften zum Hohlprofil im Spritzgieß- bzw. Presswerkzeug so ausgeführt, dass ein um + 5% größeres Hohlprofilumfangsmaß UH über die in **cI**. beschriebene Verpressung hinaus auf das gleiche in **cI**. beschriebene Kavitätsumfangsmaß UW zusätzlich verpresst wird;

**cIII.** Die in **cI**. und **cII**. genannten Kontaktflächen der wenigstens zwei Werkzeughälften im Spritzgieß- bzw. Presswerkzeug umfassen das Hohlprofil bei geschlossenem Werkzeug in seinem gesamten Umfang und weisen vorzugsweise eine Breite, d. h. eine Ausdehnung in axialer Richtung des Hohlprofils gesehen, im Bereich von 1,0 bis 50,0mm auf, besonders bevorzugt 3,0 bis 25,0mm, ganz besonders bevorzugt 5,0 bis 10,0mm;

**cIV**. In einer Ausführungsform sind die Kontaktflächen der wenigstens zwei Werkzeughälften zum Hohlprofil im Spritzgieß- bzw. Presswerkzeug so ausgeführt, dass diese Bereiche im Werkzeug durch gehärtete Einsätze dargestellt werden. Diese gehärteten Einsätze weisen vorzugsweise eine Härte nach Rockwell im Bereich von 50 bis 62 HRC auf. Damit liegt die Härte im Bereich üblicher Biege- und Stanzwerkzeuge. Siehe: **https://de.wikipedia.org/wiki/Rockwell_(Einheit);**

**cV.** Vorzugsweise bietet das Spritzgieß- bzw. Presswerkzeug zwischen seinen Kontaktflächen außerhalb der Spritzgieß- bzw. Presskavitäten einen Freiraum rund um das Hohlprofil herum. Vorzugsweise beträgt bzw. liegt dieser Freiraum im Bereich von 1,0 bis 10,0mm.

**Verfahrensschritt d)**

Im Verfahrensschritt d) erfolgt das Schließen der wenigstens einen Kavität des Spritzgieß- bzw. Presswerkzeugs sowie das Verpressen des Hohlprofils mit der Werkzeugschließbewegung in Schließrichtung der wenigstens einen Kavität, wobei eine Formänderung des in b) bereitgestellten Hohlprofils dahingehend stattfindet, dass die Außenfläche des Hohlprofils nach Beendigung des Schließvorgangs der Innenform der Kavität des in Verfahrensschritt a) bereitgestellten Spritzgieß- bzw. Presswerkzeugs, im Bereich der Kontaktflächen an den axialen Enden der wenigstens einen Spritzgieß- bzw. Presskavität entspricht. Durch das Schließen der wenigstens einen Kavität wird das Außenmaß C gleich dem Werkzeugmaß A und das Außenmaß D gleich dem Werkzeugmaß B. Das Hohlprofilumfangsmaß UH entspricht weiterhin dem Kavitätsumfangsmaß UW.

Mittels der unter Verfahrensschritt c) beschriebenen Kontaktflächen im Spritzgieß- bzw. Presswerkzeug wird im Verfahrensschritt d) das Hohlprofil eindeutig in der wenigstens einen Kavität gehalten und die für das Spritzgießen bzw. für das Pressen vorgesehenen Kavitäten am Hohlprofil werden abgedichtet.

Für das Schließen des Spritzgieß- bzw. Presswerkzeugs wird eine Presskraft benötigt, die das Hohlprofil in eine durch die Ausgestaltung der Kavität des Spritzgieß- bzw. Presswerkzeugs definierte neue Form presst, sowie eine Schließkraft für den Spritzgießprozess, um die wenigstens eine Kavität abzudichten. Die Höhe der Presskraft richtet sich nach der Form des in Verfahrensschritt b) bereitgestellten Metall basierten Hohlprofils. Ferner sind Gestalt, Dimensionen, Wandstärke/Wanddicke und Materialbeschaffenheit des Metall basierten Hohlprofils für die Vorauskalkulation der anzuwendenden Presskraft entscheidend, die der Fachmann bei der Auslegung des erfindungsgemäßen Prozesses berücksichtigen muss.

Die für das Verpressen des Hohlprofils in Verfahrensschritt d) anzuwendende Presskraft liegt vorzugsweise unterhalb der Schließkraft des Spritzgießwerkzeugs im Falle, dass ein Spritzgießverfahren für den Kunststoffauftrag angewendet wird.

Im Falle des Aufpressens eines Kunststoffauftrags durch Formpressen liegt die für das Verpressen des Hohlprofils in Verfahrensschritt h) anzuwendende Presskraft im Bereich der Schließkraft des zu diesem Zweck einzusetzenden Presswerkzeugs +/- 10%.

Die Höhe der Schließkraft des Spritzgieß- bzw. Presswerkzeugs richtet sich nach der projizierten Fläche für den Kunststoffauftrag in Verfahrensschritt e) und den Einspritzdrücken die benötigt werden, um die entsprechenden Kunststoffe im Verfahrensschritt i) einzuspritzen bzw. zu verpressen.

Erfindungsgemäß bevorzugt erfolgt das Verpressen in Verfahrensschritt h) bis folgendes gilt:

Hohlprofilaußenmaß C = Werkzeugmaß A **und**

Hohlprofilaußenmaß D = Werkzeugmaß B **und**

Hohlprofilumfangsmaß UH = Kavitätsumfangsmaß UW.

In diesem Fall ist die Kavität zum Hohlprofil umfänglich abgedichtet und das Werkzeug an den Kontaktflächen am geringsten belastet.

Tritt der Fall ein, dass das Hohlprofilaußenmaß C oder D oder das Hohlprofilumfangsmaß UH zu klein ist und die Verformung durch das Werkzeug nicht ausreicht, um als Ergebnis Hohlprofilaußenmaß D = Werkzeugmaß B zu erreichen, so verbliebe ein Spalt. In diesem Fall müssen die Toleranzen des Hohlprofils so gewählt werden, dass dieser Fall nicht eintrifft.

Ist das Hohlprofilaußenmaß A oder das Hohlprofilumfangsmaß UH zu groß gewählt, dann erreicht das Hohlprofilaußenmaß D das Werkzeugmaß B bevor das Werkzeug vollständig geschlossen ist, was zu einer tangentialen Stauchung der Hohlprofilwandung führt. Auch in diesem Fall sind deshalb die Toleranzen des Hohlprofils so zu wählen, dass ein Stauchen maximal bis zur Druckdehnung des Materials eintritt, aber kein Ausweichen der Hohlprofilwandung in Hohlräume zwischen die Trennflächen des Spritzgieß- bzw. Presswerkzeugs eintritt. In diesem Fall ist die Kavität zum Hohlprofil ebenfalls umfänglich abgedichtet, aber das Werkzeug wird an den Kontaktflächen höher belastet.

**Verfahrensschritt e)**

Im Verfahrensschritt e) erfolgt der Auftrag von Kunststoff in Form einer Schmelze auf die Außenwandung des Hohlprofils. Die in Verfahrensschritt e) anzuwendende Höhe der Einspritz- und Nachdrücke, die Einspritzgeschwindigkeiten, die Umschaltzeiten zwischen Einspritzen und Nachdrücken, die Nachdrückzeiten, die Schmelze- und Werkzeugtemperaturen und das Restmassepolster des Kunststoffauftrags sind zudem abhängig von den einzusetzenden Kunststoffmaterialien, der Geometrie der mit Kunststoff aufzufüllenden Kavität(en), der Position des Auftrags am Hohlprofil, im Falle des Spritzgusses des Angusses, und der Belastbarkeit des in Verfahrensschritt b) bereitgestellten und in Verfahrensschritt c) eingelegten Hohlprofils, die der Fachmann bei der Auslegung des erfindungsgemäßen Prozesses im Voraus berücksichtigen muss.

Durch das Verpressen des Hohlprofils im Verfahrensschritt e), insbesondere mittels der in Verfahrensschritt c) beschriebenen Werkzeugkontaktflächen, erzielt man eine Abdichtung des Spritzgieß- bzw. Presswerkzeugs gegen Austritt des in Verfahrensschritt e) aufzutragenden Kunststoffauftrags zwischen mit Kunststoffauftrag und nicht mit Kunststoffauftrag beaufschlagten Bereichen des Hohlprofils innerhalb der Werkzeugkavität. In einer Ausführungsform sind die Werkzeugkontaktflächen so ausgeführt, dass diese Bereiche im Werkzeug durch gehärtete Einsätze dargestellt werden.

Die in Verfahrensschritt c) unter Punkt **cIV.** beschriebene Ausführung gehärteter Werkzeugeinsätze dient im Verfahrensschritt d) und im Verfahrensschritt e) der Reduzierung des Verschleißes der Werkzeugkontaktflächen, da dies die einzigen Kontaktstellen zwischen Spritzgieß- bzw. Presswerkzeug und Hohlprofil sind und die gehärteten Werkzeugeinsätze vorzugsweise eine deutlich höhere Härte besitzen, als der Werkstoff des Hohlprofils.

Der Auftrag von Kunststoff auf das wenigstens eine Hohlprofil erfolgt in Verfahrensschritt e) vorzugsweise durch Spritzgießen oder Formpressen, insbesondere Spritzgießen.

**Kunststoffauftrag durch Spritzgießen**

Nach **DIN 8580** werden Fertigungsverfahren zur Herstellung geometrischer fester Körper in sechs Hauptgruppen unterteilt. Das Spritzgießen ist der Hauptgruppe 2, dem Urformen zugeordnet. Es eignet sich insbesondere für Massenartikel. Die Nacharbeit beim Spritzgießen ist gering bzw. kann ganz entfallen und selbst komplizierte Formen und Konturen können in einem Arbeitsgang gefertigt werden. Das Spritzgießen als Fertigungsverfahren in der Kunststoffverarbeitung ist dem Fachmann prinzipiell bekannt; Siehe: **https://de.wikipedia.org/wiki/Spritzgie%C3%9Fen.**

Beim Spritzgießen wird mit einer Spritzgießmaschine der zu verarbeitende Kunststoff verflüssigt bzw. plastifiziert und in eine Form, dem Spritzgießwerkzeug, unter Druck eingespritzt. Im Werkzeug geht der Kunststoff durch Abkühlung oder durch eine Vernetzungsreaktion wieder in den festen Zustand über und wird nach dem Öffnen des Werkzeugs als Fertigteil entnommen. Der Hohlraum bzw. die Kavität eines Werkzeugs bestimmt dabei die Form und die Oberflächenstruktur des erstarrten Kunststoffauftrags im Enderzeugnis, in der vorliegenden Erfindung im Kunststoff-Metall Verbundbauteil. Es sind heute durch Spritzgießen Erzeugnisse im Gewichtsbereich von wenigen zehntel Gramm bis zu einer Größenordnung von 150 kg herstellbar.

Das Spritzgießen erlaubt eine nahezu freie Wahl von Form und Oberflächenstruktur, insbesondere glatte Oberflächen, Narbungen für berührungsfreundliche Bereiche, Muster, Gravuren und Farbeffekte. Zusammen mit der Wirtschaftlichkeit macht dies das Spritzgießen zum weitverbreitetsten Verfahren zur Massenherstellung von Kunststoffteilen in praktisch allen Bereichen.

Eine Spritzgießapparatur umfasst wenigstens folgende Bauteile: 1. Schnecke 2. Einfülltrichter 3. Granulat 4. Plastifizierzylinder 5. Heizelemente 6. Werkzeug.

Innerhalb einer Spritzgießapparatur erfolgen die Schritte 1. Plastifizieren und Dosieren, 2. Einspritzen, 3. Nachdrücken und Abkühlen, und 4. Entformen.

**1. Plastifizieren und Dosieren**

Der der für den Spritzguss vorzugsweise einzusetzende thermoplastische Kunststoff rieselt in Form eines Granulats in die Gänge einer rotierenden Schnecke ein. Das Granulat wird in Richtung Schneckenspitze gefördert und durch die Wärme des Zylinders und die Friktionswärme, die beim Zerteilen und Scheren des Materials entsteht, erwärmt und aufgeschmolzen. Die Schmelze sammelt sich vor der Schneckenspitze, da die Austrittsdüse zunächst geschlossen ist. Da die Schnecke axial beweglich ist, weicht sie durch den Druck zurück und schraubt sich ähnlich einem Korkenzieher aus der Masse heraus. Die Rückwärtsbewegung wird durch einen Hydraulikzylinder oder elektrisch gebremst, so dass sich in der Schmelze ein Staudruck aufbaut. Dieser Staudruck in Verbindung mit der Schneckenrotation verdichtet und homogenisiert den als Spritzgießmaterial zu verspritzenden Kunststoff.

Die Schneckenposition wird gemessen und sobald sich eine für das Werkstückvolumen ausreichende Spritzgießmaterialmenge angesammelt hat, ist der Dosiervorgang beendet und die Schneckenrotation wird eingestellt. Ebenso wird die Schnecke aktiv oder passiv entlastet, so dass die Schmelze dekomprimiert wird.

## 2. Einspritzen

In der Einspritzphase wird die Spritzeinheit an die Schließeinheit gefahren, mit der Austrittsdüse angedrückt und die Schnecke rückseitig unter Druck gesetzt. Dabei wird die Schmelze unter hohem Druck, vorzugsweise bei einem Druck im Bereich von 200 bis 2000bar, durch die geöffnete Austrittsdüse und den Anguss bzw. das Angusssystem des Spritzgießwerkzeugs in den formgebenden Hohlraum gedrückt. Eine Rückstromsperre verhindert dabei ein Zurückströmen der Schmelze in Richtung Einfülltrichter.

Während des Einspritzens wird versucht, ein möglichst laminares Fließverhalten der Schmelze zu erreichen. Das heißt, die Schmelze wird im Spritzgießwerkzeug dort, wo sie die gekühlte Werkzeugwand berührt, sofort abgekühlt und bleibt erstarrt "kleben". Die nachrückende Schmelze wird durch den dadurch verjüngten Schmelzkanal mit noch höherer Geschwindigkeit und noch mehr Scherdeformation gedrückt und vorne an der Schmelzfront zum Rand hin dehndeformiert. Es überlagert sich Wärmeabfuhr über die Werkzeugwand und Wärmezufuhr durch Schererwärmung. Die hohe Einspritzgeschwindigkeit erzeugt in der Schmelze eine Schergeschwindigkeit, welche die Schmelze leichter fließen lässt. Ein schnelles Einspritzen ist nicht anzustreben, denn durch hohe Schergeschwindigkeiten kann ein Molekülabbau innerhalb des Kunststoffs verstärkt auftreten. Auch die Oberfläche des durch Spritzguss herzustellenden Erzeugnisses, dessen Aussehen und schließlich der Orientierungszustand der Kunststoffmoleküle werden durch die Einspritzphase beeinflusst.

## 3. Nachdrücken und Abkühlen

Da das Werkzeug kälter ist als die Kunststoffmasse, vorzugsweise weist das Werkzeug eine Temperatur im Bereich von 20 bis 120°C auf und die Kunststoffmasse weist vorzugsweise eine Temperatur im Bereich von 200 bis 300°C auf, kühlt die Schmelze in der Form ab und erstarrt bei Erreichen des Erstarrungspunkts des jeweils eingesetzten Kunststoffs, vorzugsweise des Thermoplasten bzw. des Thermoplast basierten Compounds.

Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. siehe: **https://de.wikipedia.org/wiki/Compoundierung.** Mit Compound bezeichnet man deshalb einen mit Füllstoffen oder Additiven versetzten Thermoplasten oder Duroplasten.

Das Abkühlen bei Erreichen des Erstarrungspunkts des jeweils eingesetzten Kunststoffs geht einher mit einer Volumenschwindung, die sich nachteilig auf Maßhaltigkeit und Oberflächenqualität des zu fertigenden Erzeugnisses, in der vorliegenden Erfindung des im Verfahrensschritt e) zu fertigenden und mit der Außenseite des Hohlprofils formschlüssig zu verbindenden Kunststoffelements auswirkt. Um diese Schwindung teilweise zu kompensieren, wird auch nach Füllung der Form ein reduzierter Druck aufrechterhalten, damit Kunststoffmaterial nachfließen und die Schwindung ausgleichen kann. Dieses Nachdrücken kann solange erfolgen, bis der Anguss erstarrt ist.

Nach Beendigung des Nachdrückens kann die Austrittsdüse geschlossen werden und in der Spritzeinheit bereits der Plastifizier- und Dosiervorgang für das nächste Formteil beginnen. Das Kunststoffmaterial in der Form kühlt in der Restkühlzeit weiter ab, bis auch die Seele, der flüssige Kern des Kunststoffauftrags, erstarrt ist und eine zum Entformen hinreichende Steifigkeit erreicht ist. Dieser Vorgang wird auch als Solidifikation bezeichnet und erfolgt erfindungsgemäß für den Kunststoffauftrag im Verfahrensschritt f).

Die Spritzeinheit kann dann von der Schließeinheit wegbewegt werden, da kein Kunststoff mehr aus dem Anguss austreten kann. Dies dient dazu, einen Wärmeübergang von der wärmeren Austrittsdüse auf den kälteren Anguss zu verhindern.

## 4. Entformen

Zum Entformen eines spritzgegossenen Erzeugnisses, bzw. des mit Kunststoffauftrag versehenen Hohlprofils im erfindungsgemäßen Verfahrensschritt e), öffnet sich die Kavität und das Erzeugnis wird durch in die Kavität eindringende Stifte ausgeworfen und fällt entweder herunter (Schüttgut) oder wird durch Handlinggeräte aus dem Spritzgießwerkzeug entnommen und geordnet abgelegt oder direkt einer Weiterverarbeitung zugeführt. Vorzugsweise ist dafür das Spritzgieß- bzw. Presswerkzeug mit einer Auswerferseite versehen.

Der Anguss muss entweder durch separate Bearbeitung entfernt werden oder wird beim Entformen automatisch abgetrennt. Auch angussloses Spritzgießen ist mit Heißkanalsystemen, bei denen das Angusssystem ständig über der Erstarrungstemperatur des einzusetzenden Kunststoffs, vorzugsweise Thermoplasten, Duroplasten oder Compounds, bleibt und das enthaltene Material somit für den nächsten Schuss verwendet werden kann, möglich.

## Kunststoffauftrag durch Formpressen

Das Formpressen gehört zur Familie der Urformverfahren. Formpressen ist ein Herstellungsverfahren für Kunststoffe, geeignet für leicht gewölbte oder flache Bauteile. Haupteinsatzgebiet dieses Verfahrens ist die Automobilindustrie, wo es zur Produktion größerer Bauteile mit zweidimensionaler oder einfacher dreidimensionaler Struktur, insbesondere Motorhauben, Stoßfänger, Spoiler oder Heckklappen eingesetzt wird. Es können sowohl duroplastische als auch thermoplastische Kunststoffe verarbeitet werden.

Zu Beginn des Formpressverfahrens wird die zu verarbeitende Formmasse in die vorgesehene, aufgeheizte Kavität eingebracht. Anschließend wird die Kavität unter Einsatz eines Druckkolbens geschlossen. Durch den Druck erlangt die Formmasse die vom Werkzeug vorgegebene Form. Bei duroplastischen Kunststoffen dient die Temperatur zur Beeinflussung des Aushärtevorgangs, bei Thermoplasten zum Schmelzen des Kunststoffs. Nach dem Abkühlen kann das fertige Erzeugnis aus dem Formwerkzeug entnommen und ggf. nach- oder weiterverarbeitet werden.

Das Formpressverfahren eignet sich vor allem für mittelgroße Stückzahlen, da in diesem Fall die Werkzeugkosten in der Regel geringer sind als zum Beispiel beim Spritzgießen. Das Formpressen kann auch zur Herstellung von Faserverbundwerkstoffen eingesetzt werden, u.a. zur Herstellung von faserverstärkten Kunststoffen.

Siehe: **https://de.wikipedia.org/wiki/Formpressen**

Ein bekanntes Formpressverfahren für thermoplastische Kunststoffe ist vor allem das D-LFT (Direct Long Fiber Thermoplastic Molding) Verfahren, wie es beispielsweise in DE-A 43 30 860 beschrieben ist.

Bekannte Formpressverfahren für duroplastische Kunststoffe sind vor allem das SMC-Verfahren (Sheet Molding Compound) und das BMC-Verfahren (Bulk Transfer Molding Compound). Ein SMC-Verfahren ist beispielsweise in EP 1 386 721 A1 beschrieben. Zu BMC-Verfahren siehe: Handbuch Spritzgießen, ISBN 978 3 446 15632 6, 1. Auflage 2001, Seiten 1022 - 1024, Carl Hanser Verlag**.**

## In Verfahrensschritt e) aufzutragende Kunststoffe

Im Verfahrensschritt e) einzusetzende Kunststoffe sind vorzugsweise thermoplastische oder duroplastische Kunststoffe, besonders bevorzugt thermoplastische Kunststoffe.

Bevorzugte thermoplastische Kunststoffe sind Polyamide (PA), Polyester, insbesondere Polybutylenterephthalat (PBT) oder Polyethylenterephthalat (PET), Polyethylen (PE), Polypropylen (PP) oder Polyvinylchlorid (PVC). Besonders bevorzugt wird als thermoplastischer Kunststoff im Verfahrensschritt e) Polyamid oder Polyester eingesetzt. Bevorzugt wird als Polyamid ein Polyamid 6 eingesetzt. Insbesondere wird als Polyester PBT eingesetzt. Bevorzugte duroplastische Kunststoffe sind Epoxidharze, vernetzbare Polyurethane oder ungesättigte Polyesterharze.

Vorzugsweise wird der Thermoplast oder Duroplast in Form eines Compounds eingesetzt.

Besonders bevorzugt wird der in Verfahrensschritt e) aufzutragende Kunststoffauftrag aus einem thermoplastischen Kunststoff mit wenigstens einem Füll- oder Verstärkungsstoff hergestellt. Bevorzugt wird wenigstens ein Füll- oder Verstärkungsstoff aus der Gruppe Kohlenstofffasern [CAS Nr. 7440-44-0], Glaskugeln oder Voll- oder Hohlglaskugeln, oder Glasfasern, oder gemahlenes Glas, insbesondere alle basierend auf Aluminium-Borsilikatglas mit einem Alkaligehalt 1% (E-Glas) [CAS Nr. 65997-17-3], amorphe Kieselsäure [CAS Nr. 7631-86-9], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0] und Montmorillonit [CAS Nr. 67479-91-8] eingesetzt. Besonders bevorzugt werden Glasfasern eingesetzt.

Insbesondere bevorzugt werden auf 100 Massenanteile des thermoplastischen Kunststoffs Füll- oder Verstärkungsstoffe in Mengen im Bereich von 0,1 bis 150 Massenanteilen eingesetzt. Insbesondere ganz besonders bevorzugt werden auf 100 Massenanteile des thermoplastischen Kunststoffs Füll- oder Verstärkungsstoffe in Mengen im Bereich von 15 bis 150 Massenanteilen eingesetzt.

Insbesondere bevorzugt wird im Verfahrensschritt e) ein Kunststoffauftrag aus glasfaserverstärktem Polyamid 6 mit 15 bis 150 Massenanteilen Glasfasern auf 100 Massenanteile Polyamid im Spritzgießverfahren eingesetzt. Derartige Compounds sind erhältlich unter der Bezeichnung Durethan® bei der Lanxess Deutschland GmbH, Köln.

Auch ein in Verfahrensschritt e) aufzutragender duroplastischer Kunststoff enthält vorzugsweise wenigstens einen der oben genannten Füll- oder Verstärkungsstoffe. Bevorzugt enthält der duroplastische Kunststoff als Füll- oder Verstärkungsstoff Glasfasern oder Kohlenstofffasern. Insbesondere bevorzugt werden auf 100 Massenanteile des duroplastischen Kunststoffs 10 bis 150 Massenanteile Glasfasern oder Kohlenstofffasern als Füll- oder Verstärkungsstoff eingesetzt.

## Verfahrensschritt f)

Im Verfahrensschritt f) erfolgt das Abkühlen des Kunststoffauftrags bzw. der Kunststoffüberspritzung, auch als Solidifikation bezeichnet. Der Begriff der Solidifikation beschreibt das Erstarren des in Verfahrensschritt e) aufgetragenen schmelzflüssigen Kunststoffs durch Abkühlen bzw. durch chemische Vernetzung zu einem Festkörper. Im Falle einer gleichzeitigen Formgebung können auf diese Weise direkt Funktionselemente, Strukturen und Flächen auf der Hohlprofilaußenwandung aufgebracht werden.

In einer Ausführungsform der vorliegenden Erfindung und im Falle einer weiter oben beschriebenen Oberflächenbehandlung entsteht nach dem Erstarren der Kunststoffschmelze auf der äußeren Oberfläche des Hohlprofils, vorzugsweise einem Metallrohr, ein Kunststoffauftrag in Form eines geschlossenen Kunststoffrings mit einer strukturierten Innenfläche, die exakt das positive Abbild der Oberflächenstruktur der Außenwandung des Hohlprofils, vorzugsweise des Metallrohrs, darstellt.

Eine erfindungsgemäße schubsteife, schubfeste, hochbelastbare und formschlüssige Verbindung rund um die äußere Wandung des Hohlprofils, vorzugsweise um die äußere Wandung des Hohlprofils in Form eines Metallrohrs, ist entstanden.

Weitere Details zum Verfahrensschritt f) wurden bereits oben im Abschnitt **"Nachdrücken und Abkühlen"** beschrieben.

**Verfahrensschritt g)**

Im Verfahrensschritt g) wird das fertige Kunststoff-Metall Verbundbauteil aus dem Spritzgieß- bzw. Presswerkzeug entnommen, nachdem mit Erstarren der Kunststoffschmelze der Druck im Kunststoffauftrag nicht mehr vorhanden ist und die Press- und Schließkraft mit dem Öffnen des Werkzeugs abgebaut wurde. Weitere Details wurden bereits oben im Abschnitt **"Entformen"** beschrieben.

**Kunststoff-Metall Verbundbauteil**

Erfindungsgemäß herzustellende Kunststoff-Metall Verbundbauteile werden in entsprechender Gestaltung vorzugsweise für den Kraftfahrzeugbau, insbesondere im Automobilbau eingesetzt. Bevorzugt handelt es sich beim Kunststoff-Metall Verbundbauteil um ein Kraftfahrzeug Karosserieteil, insbesondere um ein Cross Car Beam (CCB), auch als Instrumententafelquerträger bezeichnet. Bekannt sind Instrumententafelquerträger beispielsweise aus US 5 934 744 A oder US 8 534 739 B. Ebenfalls bevorzugt handelt es sich beim Kunststoff-Metall Verbundbauteil um ein Kraftfahrzeug Karosserieteil, insbesondere um ein Frontend Modul Carrier, auch als "Grill Opening Reinforcement" oder als "Bolster" bezeichnet. Bekannt sind Frontend Modul Carrier beispielsweise aus EP 0 519 776 A1.

Im erfindungsgemäßen Kunststoff-Metall Verbundbauteil, auch aufgrund der zwei Komponenten als Hybridbauteil bezeichnet, versteifen und verstärken sich das Hohlprofil und der im Verfahrensschritt e) mittels einer Kunststoffschmelze aufgetragene Kunststoffauftrag gegenseitig. Ferner dient der im Verfahrensschritt e) auf die äußere Wandung des Hohlprofils aufgetragene Kunststoffauftrag darüber hinaus zur Funktionsintegration im Sinne einer System- bzw. Modulbildung zur Anbindung von Kunststoffstrukturen oder Kunststoffflächen.

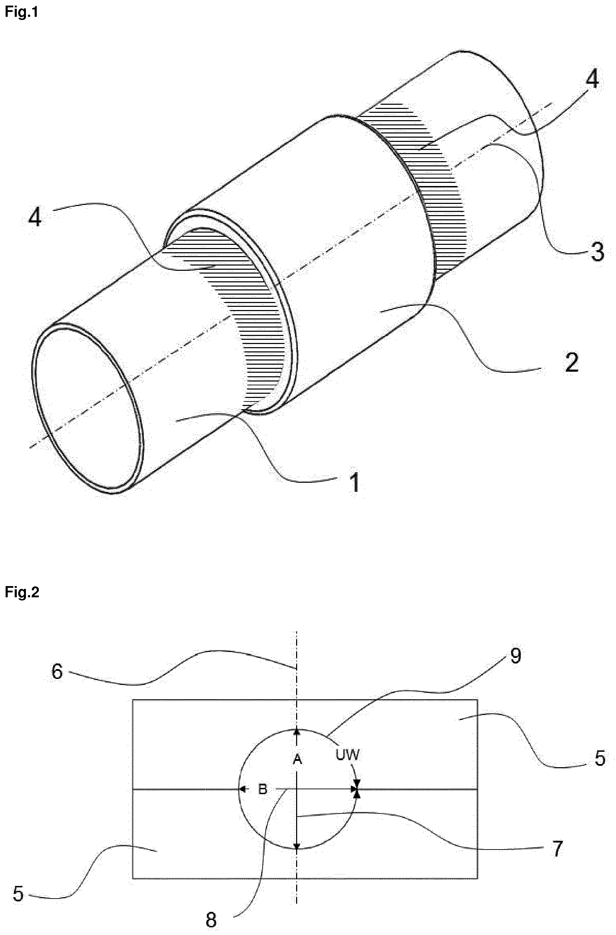

Die vorliegende Erfindung wird anhand der **Fig. 1 ,Fig. 2, Fig. 3 und Fig. 4** erläutert:

**Fig. 1** zeigt ein erfindungsgemäß herzustellendes Verbundbauteil nach dem Spritzgieß- bzw. Pressverfahren, worin **(1)** für das Hohlprofil, hier in der Ausführungsform eines Rohres mit einer ellipsenförmigen Querschnittsform, und **(2)** für einen mit dem Hohlprofil formschlüssig oder adhäsiv verbundenen Kunststoffauftrag steht. **(3)** zeigt die Längsachse des Hohlprofils. **(4)** zeigt die Kontaktflächen zur Abdichtung, die sich neben dem Kunststoffauftrag **(2)** auf dem Hohlprofil, im Bereich 1,0 - 10,0mm, in Richtung der Längsachse **(3)** gesehen, befinden.

**Fig. 2** zeigt den Querschnitt eines erfindungsgemäß einzusetzenden Spritzgieß- bzw. Presswerkzeugs **(5)** in geschlossenem Zustand mit der Öffnungs- und Schließrichtung **(6)** im Bereich der Kontaktflächen zur Abdichtung **(4)** die sich neben dem Kunststoffauftrag **(2)** auf dem Hohlprofil, im Bereich von 1,0 - 10,0mm in Richtung der Längsachse des Hohlprofils **(3)** gesehen, befinden. **(7)** zeigt das Werkzeugmaß A der Werkzeugkavität in Schließrichtung gesehen. **(8)** zeigt das Werkzeugmaß B der Werkzeugkavität rechtwinklig zur Schließrichtung gesehen und **(9)** das Kavitätsumfangsmaß UW im Bereich von Werkzeugmaß A und B.

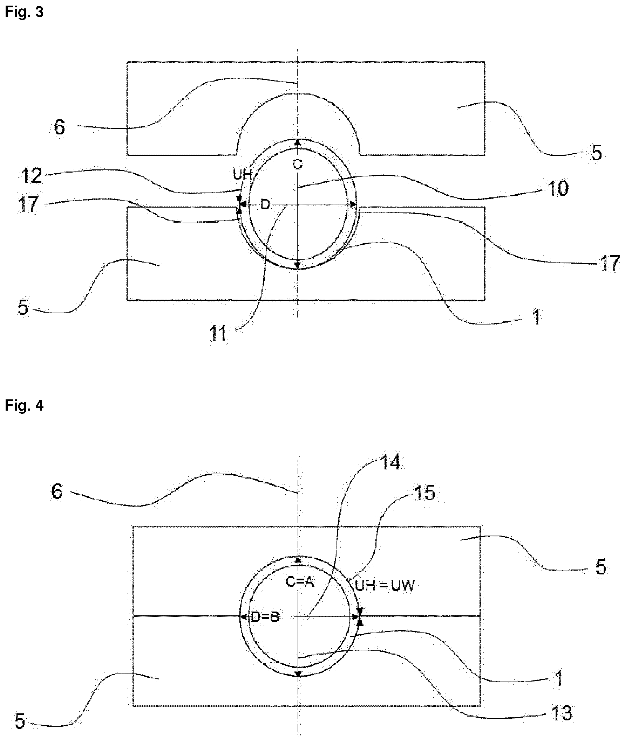

**Fig. 3** zeigt den Querschnitt eines geöffneten Spritzgieß- bzw. Presswerkzeugs **(5)** mit eingelegtem Hohlprofil **(1)** im Bereich der Kontaktflächen zur Abdichtung **(4),** die sich neben dem Kunststoffauftrag **(2)** auf dem Hohlprofil **(1)**, im Bereich von 1.0 - 10,0mm in Richtung der Längsachse des Hohlprofils **(3)** (siehe **Fig. 1**) gesehen befinden. **(10)** zeigt das Außenmaß C des Hohlprofils **(1)** in Schließrichtung gesehen. **(11)** zeigt das Außenmaß D des Hohlprofils **(1)** und **(12)** zeigt das Hohlprofilumfangsmaß UH des Hohlprofils **(1)** im Bereich des Hohlprofilmaß C und D. **(17)** zeigt das Spiel zwischen Hohlprofil und Werkzeugkavität.

**Fig. 4** zeigt den Querschnitt eines erfindungsgemäß einzusetzenden Spritzgieß- bzw. Presswerkzeugs **(5)** in geschlossenem Zustand mit eingelegtem Hohlprofil **(1)** im Bereich der Kontaktflächen zur Abdichtung **(4),** die sich neben dem Kunststoffauftrag **(2)** auf dem Hohlprofil **(1),** im Bereich von 1,0 bis 10,0mm in Richtung der Längsachse **(3)** (siehe **Fig.**

**1)** gesehen, befindet. **(13)** steht für das Außenmaß C des verspressten Hohlprofils **(1)** im Bereich der Kontaktflächen zur Abdichtung **(4)**, die sich neben dem Kunststoffauftrag **(2)** auf dem Hohlprofil **(1)**, im Bereich von 1,0 - 10,0mm in Richtung von dessen Längsachse **(3)** gesehen, befindet. Nach dem Verpressen ist das Außenmaß C gleich dem Werkzeugmaß A. **(14)** steht für das Außenmaß D des verspressten Hohlprofils **(1)** im Bereich der Kontaktflächen zur Abdichtung **(4)**, die sich neben dem Kunststoffauftrag **(2)** auf dem Hohlprofil **(1)**, im Bereich von 1,0 bis 10,0mm in Richtung von dessen Längsachse **(3)** gesehen, befindet. Nach dem Verpressen ist das Außenmaß B gleich dem Werkzeugmaß D. **(15)** steht für das Hohlprofilumfangsmaß UH des verspressten Hohlprofils **(1)** im Bereich der Kontaktflächen zur Abdichtung **(4)**, die sich neben dem Kunststoffauftrag **(2)** auf dem Hohlprofil **(1)**, im Bereich von 1,0 bis 10,0mm, in Richtung von dessen Längsachse **(3)** gesehen, befindet. Nach dem Verpressen ist das Hohlprofilumfangsmaß UH gleich dem Kavitätsumfangsmaß UW im Bereich von Werkzeugmaß C und D.

**Patentansprüche**

1. Verfahren zur Herstellung eines Kunststoff-Metall Verbundbauteils, insbesondere mit schubfester und formschlüssiger Verbindung der Metallkomponente und der Kunststoffkomponente, durch

   a) Bereitstellen eines Spritzgieß- bzw. Presswerkzeugs **(5)** mit wenigstens einer zu öffnenden Kavität und einem **(7)** Werkzeugmaß A in Schließrichtung und einem **(8)** Werkzeugmaß B rechtwinklig zur Schließrichtung des Spritzgieß- bzw. Presswerkzeugs und einem **(9)** Kavitätsumfangsmaß UW, das dem Umfang der Kavität im Bereich der Spritzgieß- bzw. Presswerkzeugmaße A und B entspricht,
   b) Bereitstellen wenigstens eines Hohlprofils **(1)** aus Metall mit einem Verhältnis von Durchmesser zu Wanddicke im Bereich von 5:1 bis 300:1, dessen **(10)** Außenmaß C um einen Bereich von 0,1 bis 5% größer ist als das **(7)** Werkzeugmaß A, und dessen **(11)** Außenmaß D um einen Bereich von 0,1 bis 5% kleiner ist als das **(8)** Werkzeugmaß B und die Angaben zu C und D sich auf 90° in Richtung zur Längsachse **(3)** des Hohlprofils **(1)** gesehen beziehen und dessen **(12)** Hohlprofilumfangsmaß UH dem in a) genannten Kavitätsumfangsmaß UW **(9)** der wenigstens einen Presswerkzeug- bzw. Spritzgießwerkzeugkavität UW entspricht,
   c) Einlegen des Hohlprofils **(1)** in die wenigstens eine Kavität des in a) bereitgestellten Spritzgieß- bzw. Presswerkzeugs **(5)**,

   d) Schließen der wenigstens einen Kavität des Spritzgieß- oder Presswerkzeugs **(5)** sowie Verpressen des Hohlprofils **(1)** mit der Werkzeugschließbewegung in Schließrichtung **(6)** der wenigstens einen Kavität, wobei eine Formänderung des in b) bereitgestellten Hohlprofils **(1)** stattfindet und die Außenfläche des Hohlprofils **(1)** nach Beendigung des Schließvorgangs der Innenform der Kavität des in Verfahrensschritt a) bereitgestellten Spritzgieß- bzw. Presswerkzeugs **(5)** im Bereich der Kontaktflächen **(4)** an den axialen Enden der wenigstens einen Kavität entspricht, wobei das Hohlprofilumfangsmaß UH **(12)** gleich dem Kavitätsumfangsmaß UW **(9)** bleibt,
   e) äußeres Auftragen eines Kunststoffauftrags **(2)** in Form einer Schmelze mit einem Druck im Bereich von 1 bar bis 1000 bar auf das Hohlprofil **(1)**, bevorzugt im Bereich von 10 bar bis 500bar, besonders bevorzugt im Bereich von 50 bar bis 300 bar,
   f) Abkühlen des auf das Hohlprofil **(1)** in e) aufgebrachten Kunststoffauftrags **(2)** (Solidifikation), und
   g) Entnehmen des fertigen Verbundbauteils aus dem Spritzgieß- bzw. Presswerkzeug **(5)**,

   mit der Maßgabe, dass die Formänderung des Hohlprofils mit dem Schließen des Spritzgieß- bzw. Presswerkzeugs **(5)** und damit gleichzeitig das Abdichten der Werkzeugkavität gegenüber der Hohlprofilaußenfläche das anschließende und örtlich begrenzte Auftragen von Kunststoff **(2)** auf das Metall basierte Hohlprofil **(1)** in Verfahrensschritt e) ohne im Innern des Hohlprofils **(1)** positionierte und dem Spritz- bzw. Pressdruck entgegenwirkende Hilfsmittel erfolgt.

2. Verfahren gemäß Anspruch 1, **dadurch gekennzeichnet, dass** eine formschlüssige Verbindung von Hohlprofil **(1)** und Kunststoffauftrag **(2)** radial in alle Richtungen um die Mittelachse des Hohlprofils herum und rotatorisch zu einer Achse rechtwinklig zur Mittelachse des Hohlprofils **(1)** erzielt wird.

3. Verfahren gemäß Anspruch 1 oder 2, **dadurch gekennzeichnet, dass** zusätzlich die Verbindung von Hohlprofil **(1)** und Kunststoffauftrag **(2)** mit der Blockierung aller Freiheitsgrade, translatorisch in X-, Y- und Z-Richtung und rotatorisch um die X-, Y- und Z-Achse mittels einer Oberflächenbehandlung der äußeren Wandung des Hohlprofils **(1)** erzielt wird.

4. Verfahren gemäß Anspruch 3, **dadurch gekennzeichnet, dass** als Oberflächenbehandlung wenigstens eine der Formen Auftrag wenigstens eines Haftvermittlers, Plasma-Oberflächenaktivierung, Laserstrukturierung, chemische Vorbehandlung und additives Auftrageverfahren ausgewählt wird.

5. Verfahren gemäß Anspruch 4, **dadurch gekennzeichnet, dass** als chemische Vorbehandlungsmittel der Einsatz von Säuren oder Basen und als additives Auftragsverfahren das thermische Metallaufspritzverfahren durchgeführt werden.

6. Verfahren gemäß einem der Ansprüche 1 bis 5, **dadurch gekennzeichnet, dass** das bereitzustellende Hohlprofil **(1)** auf seiner Außenseite Strukturelemente aufweist.

7. Verfahren gemäß Anspruch 6, **dadurch gekennzeichnet, dass** es sich bei den Strukturelementen um Rippen handelt.

8. Verfahren gemäß einem der Ansprüche 1 bis 7, **dadurch gekennzeichnet, dass** vor oder nach dem Verfahrensschritt d) das Hohlprofil **(1)** an wenigstens einer Position durch das Einwirken zusätzlicher Biegekräfte verformt wird.

9. Verfahren gemäß einem der Ansprüche 1 bis 8, **dadurch gekennzeichnet, dass** vor dem Verfahrensschritt g) das Hohlprofil **(1)** an wenigstens einer Position durch das Einwirken zusätzlicher Biegekräfte verformt wird.

10. Verfahren gemäß Anspruch 9, **dadurch gekennzeichnet, dass** diese Verformung außerhalb des Werkzeugs **(5)** an jeder beliebigen Position des Hohlprofils (1) erfolgt.

11. Verfahren gemäß einem der Ansprüche 1 bis 10, **dadurch gekennzeichnet, dass** es sich bei dem Kunststoff-Metall Verbundbauteil um ein Kraftfahrzeug Karosserieteil, handelt.

12. Verfahren gemäß Anspruch 11, **dadurch gekennzeichnet, dass** es sich bei dem Karosserieteil um ein Cross Car Beam handelt.

**Claims**

1. Process for producing a plastic-metal composite component, especially with a shear-resistant and form-fitting bond of the metal component and plastics component, by

   a) providing an injection mould/compression mould **(5)** having at least one openable cavity and a **(7)** mould dimension A in closure direction and a **(8)** mould dimension B at right angles to closure direction of the injection mould/compression mould and a **(9)** cavity circumference UW corresponding to the circumference of the cavity in the region of the injection mould/compression mould dimensions A and B,

   b) providing at least one hollow profile **(1)** made of metal with a ratio of diameter to wall thickness in the range from 5:1 to 300:1, the **(10)** outer dimension C of which is greater by a range of 0.1% to 5% than the **(7)** mould dimension A, and the **(11)** outer dimension D of which is smaller by a range of 0.1% to 5% than the **(8)** mould dimension B, and the figures for C and D are based on 90° viewed in the direction toward the longitudinal axis **(3)** of the hollow profile **(1),** and the **(12)** hollow profile circumference UH of which corresponds to the cavity circumference UW **(9)** of the at least one injection mould/compression mould cavity UW specified in a),

   c) inserting the hollow profile **(1)** into the at least one cavity of the injection mould/compression mould **(5)** provided in a),

   d) closing the at least one cavity of the injection mould or compression mould **(5)** and pressing the hollow profile **(1)** by the mould closure movement in closure direction **(6)** of the at least one cavity, with a change in the shape of the hollow profile **(1)** provided in b), and where the outer surface of the hollow profile **(1),** after the end of the closure operation, corresponds to the inner shape of the cavity of the injection mould/compression mould **(5)** provided in process step a) in the region of the contact surfaces **(4)** at the axial ends of the at least one cavity, where the hollow profile circumference UH **(12)** remains equal to the cavity circumference UW **(9),**

   e) externally applying an application of plastic **(2)** in the form of a melt with a pressure in the range from 1 bar to 1000 bar to the hollow profile **(1),** preferably in the range from 10 bar to 500 bar, more preferably in the range from 50 bar to 300 bar,

   f) cooling the application of plastic **(2)** applied to the hollow profile **(1)** in e) (solidification), and

   g) removing the finished composite component from the injection mould/compression mould **(5),**

with the proviso that the change in shape of the hollow profile by the closing of the injection mould or compression mould **(5)** and hence simultaneously the sealing of the mould cavity with respect to the outer hollow profile surface effects the subsequent and locally restricted application of plastic **(2)** to the metal-based hollow profile **(1)** in process step e) without auxiliarie positioned within the hollow profile **(1)** that counteract the injection or compression pressure.

2. Process according to Claim 1, **characterized in that** a form-fitting bond of hollow profile **(1)** and application of plastic **(2)** is achieved radially in all directions about the centre axis of the hollow profile and rotationally to an axis at right angles to the centre axis of the hollow profile **(1)**.

3. Process according to Claim 1 or 2, **characterized in that**, in addition, the bond of hollow profile **(1)** and application of plastic **(2)** is achieved with the blocking of all degrees of freedom, by translation in X, Y and Z direction and by rotation about the X, Y and Z axis, by means of a surface treatment of the outer wall of the hollow profile **(1)**.

4. Process according to Claim 3, **characterized in that** the surface treatment selected is at least one of the following forms: application of at least one adhesion promoter, plasma surface activation, laser structuring, chemical pretreatment and additive manufacturing method.

5. Process according to Claim 4, **characterized in that** the means of chemical pretreatment conducted is the use of acids or bases and the additive manufacturing method conducted is the thermal metal spray application method.

6. Process according to any of Claims 1 to 5, **characterized in that** the hollow profile **(1)** to be provided has structural elements on its outside.

7. Process according to Claim 6, **characterized in that** the structural elements are fins.

8. Process according to any of Claims 1 to 7, **characterized in that**, before or after process step d), the hollow profile **(1)** is deformed at at least one position by the action of additional flexural forces.

9. Process according to any of Claims 1 to 8, **characterized in that**, before process step g), the hollow profile **(1)** is deformed at at least one position by the action of additional flexural forces.

10. Process according to Claim 9, **characterized in that** this deforming is effected outside the mould **(5)** at any desired position in the hollow profile **(1)**.

11. Process according to any of Claims 1 to 10, **characterized in that** the plastic-metal composite component is a motor vehicle bodywork part.

12. Process according to Claim 11, **characterized in that** the bodywork part is a cross car beam.

**Revendications**

1. Procédé de fabrication d'un composant composite plastique-métal, notamment avec une liaison résistante au cisaillement et par complémentarité de formes de l'élément métallique et de l'élément plastique, par a) fourniture d'un outil de moulage par injection ou de compression (5) muni d'au moins une cavité à ouvrir et présentant une (7) dimension d'outil A dans la direction de fermeture et une (8) dimension d'outil B à angle droit de la direction de fermeture de l'outil de moulage par injection ou de compression et une (9) dimension de circonférence de cavité UW, qui correspond à la circonférence de la cavité dans la zone des dimensions d'outil de moulage par injection ou de compression A et B,

b) fourniture d'au moins un profilé creux (1) en métal ayant un rapport entre le diamètre et l'épaisseur de paroi dans la plage allant de 5:1 à 300:1, dont la (10) dimension extérieure C est supérieure d'une plage allant de 0,1 à 5 % à la (7) dimension d'outil A, et dont la (11) dimension extérieure D est inférieure d'une plage allant de 0,1 à 5 % à la (8) dimension d'outil B et les indications relatives à C et D se rapportent à tel que vu à 90° dans la direction de l'axe longitudinal (3) du profilé creux (1) et dont la (12) dimension de circonférence de profilé creux UH correspond à la dimension de circonférence de cavité UW (9) mentionnée en a) de l'au moins une cavité d'outil de compression ou d'outil de moulage par injection UW,

c) introduction du profilé creux (1) dans l'au moins une cavité de l'outil de moulage par injection ou de compression (5) fourni en a),

d) fermeture de l'au moins une cavité de l'outil de moulage par injection ou de compression (5), et compression du profilé creux (1) avec le mouvement de fermeture de l'outil dans la direction de fermeture (6) de l'au moins une cavité, une modification de forme du profilé creux (1) fourni en b) ayant lieu et la surface extérieure du profilé creux (1) correspondant après la fin du processus de fermeture à la forme intérieure de la cavité de l'outil de moulage par injection ou de compression (5) fourni dans l'étape de procédé a) dans la zone des surfaces de contact (4) aux extrémités axiales de l'au moins une cavité, la dimension de circonférence de profilé creux UH (12) restant identique à la dimension de circonférence de cavité UW (9),

e) application extérieure d'une couche de plastique (2) sous la forme d'une masse fondue avec une pression dans la plage allant de 1 bar à 1 000 bar sur le profilé creux (1), de préférence dans la plage allant de 10 bar à 500 bar, de manière particulièrement préférée dans la plage allant de 50 bar à 300 bar,

f) refroidissement de la couche de plastique (2) appliquée sur le profilé creux (1) en e) (solidification), et

g) extraction du composant composite fini de l'outil de moulage par injection ou de compression (5), à condition que la modification de forme du profilé creux avec la fermeture de l'outil de moulage par injection ou de compression (5) et ainsi simultanément l'étanchéification de la cavité d'outil vis-à-vis de la surface extérieure de profilé creux effectue l'application ultérieure et limitée localement de plastique (2) sur le profilé creux (1) à base de métal dans l'étape de procédé e) sans auxiliaires positionnés à l'intérieur du profilé creux (1) et contrant la pression d'injection ou de compression.

2. Procédé selon la revendication 1, **caractérisé en ce qu'**une liaison par complémentarité de formes du profilé creux (1) et de la couche de plastique (2) est obtenue radialement dans toutes les directions autour de l'axe médian du profilé creux et par rotation par rapport à un axe à angle droit de l'axe médian du profilé creux (1).

3. Procédé selon la revendication 1 ou 2, **caractérisé en ce qu'**en outre, la liaison du profilé creux (1) et de la couche de plastique (2) est obtenue avec le blocage de tous les degrés de liberté, par translation dans la direction X, Y et Z et par rotation autour de l'axe X, Y et Z, au moyen d'un traitement de surface de la paroi extérieure du profilé creux (1).

4. Procédé selon la revendication 3, **caractérisé en ce qu'**en tant que traitement de surface, au moins une des formes d'application d'au moins un promoteur d'adhésion, d'activation de surface par plasma, de structuration laser, de prétraitement chimique et de procédé d'application additif est choisie.

5. Procédé selon la revendication 4, **caractérisé en ce qu'**en tant qu'agent de prétraitement chimique, l'utilisation d'acides ou de bases est réalisée et en tant que procédé d'application additif, le procédé de pulvérisation thermique de métal est réalisé.

6. Procédé selon l'une quelconque des revendications 1 à 5, **caractérisé en ce que** le profilé creux (1) à fournir comprend des éléments structuraux sur son côté extérieur.

7. Procédé selon la revendication 6, **caractérisé en ce que** les éléments structuraux consistent en des nervures.

8. Procédé selon l'une quelconque des revendications 1 à 7, **caractérisé en ce qu'**avant ou après l'étape de procédé d), le profilé creux (1) est déformé à au moins une position par l'action de forces de flexion supplémentaires.

9. Procédé selon l'une quelconque des revendications 1 à 8, **caractérisé en ce qu'**avant l'étape de procédé g), le profilé creux (1) est déformé à au moins une position par l'action de forces de flexion supplémentaires.

10. Procédé selon la revendication 9, **caractérisé en ce que** cette déformation a lieu à l'extérieur de l'outil (5) à toute position quelconque du profilé creux (1).

11. Procédé selon l'une quelconque des revendications 1 à 10, **caractérisé en ce que** le composant composite plastique-métal consiste en une partie de carrosserie de véhicule automobile.

12. Procédé selon la revendication 11, **caractérisé en ce que** la partie de carrosserie consiste en une traverse.

**Fig.1**

**Fig.2**

**Fig. 3**

6
5
12
17
UH
C
D
10
17
5
11
1

**Fig. 4**

6
14
15
5
C=A
UH = UW
D=B
5
13
1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009077026 A1
- WO 2005002825 A1
- DE 4330860 A
- EP 1386721 A1
- US 5934744 A
- US 8534739 B
- EP 0519776 A1

**In der Beschreibung aufgeführte Nicht-Patentliteratur**

- **W. MICHAELI ; G. MENGES ; P. MOHREN.** Anleitung zum Bau von Spritzgießwerkzeugen. Carl Hanser Verlag, 1999
- **D. ALTENPOHL.** Aluminium und Aluminiumlegierungen. Springer Verlag, 1965
- Handbuch Spritzgießen. Carl Hanser Verlag, 2001, 1022-1024
- *CHEMICAL ABSTRACTS,* 7440-44-0
- *CHEMICAL ABSTRACTS,* 65997-17-3
- *CHEMICAL ABSTRACTS,* 7631-86-9
- *CHEMICAL ABSTRACTS,* 1344-95-2
- *CHEMICAL ABSTRACTS,* 10101-39-0
- *CHEMICAL ABSTRACTS,* 546-93-0
- *CHEMICAL ABSTRACTS,* 1332-58-7
- *CHEMICAL ABSTRACTS,* 92704-41-1
- *CHEMICAL ABSTRACTS,* 1317-65-3
- *CHEMICAL ABSTRACTS,* 1302-76-7
- *CHEMICAL ABSTRACTS,* 14808-60-7
- *CHEMICAL ABSTRACTS,* 1318-94-1
- *CHEMICAL ABSTRACTS,* 12251-00-2
- *CHEMICAL ABSTRACTS,* 7727-43-7
- *CHEMICAL ABSTRACTS,* 68476-25-5
- *CHEMICAL ABSTRACTS,* 13983-17-0
- *CHEMICAL ABSTRACTS,* 67479-91-8